# EUROPEAN PATENT APPLICATION

(11) **EP 4 498 305 A1**
(43) Date of publication of application: **29.01.2025**
(21) Application number: 23774482.6
(22) Date of filing: 06.03.2023
(51) Int. Cl.: G06Q 10/0833

(54) **INFORMATION MANAGEMENT METHOD AND INFORMATION MANAGEMENT DEVICE**

(30) Priority: 23.03.2022 JP 2022047192; 12.07.2022 JP 2022112030
(71) Applicant: DENSO CORPORATION, Kariya-city, Aichi-pref., 448-8661 (JP)
(72) Inventor: OKABE Tatsuya, Kariya-city Aichi-pref. 448-8661 (JP); NAMIKI Haruhiko, Kariya-city Aichi-pref. 448-8661 (JP); MURAKAMI Takakazu, Kariya-city Aichi-pref. 448-8661 (JP)
(74) Representative: Winter, Brandl - Partnerschaft mbB
(86) International application number: PCT/JP2023/008328
(87) International publication number: WO 2023/181883

(57) **Abstract**

An information management server manages information provided by multiple suppliers (SR) that constitute a supply chain (SC). In an information management method implemented by the information management server, item identification information (UID) that is attached to an item (IM) shipped from a supplier (SR) and identifies the item (IM) is issued to a supplier terminal. Then, stored hash values (HVs) acquired by hashing the history information (TRI) related to the item (IM) are acquired together with the item identification information (UID), and are linked to the item identification information (UID) in the BC database (BDB).

## Description

### CROSS REFERENCE TO RELATED APPLICATION

The present application is based on Patent Application No. 2022-47192, filed in Japan on March 23, 2022, and Patent Application No. 2022-112030, filed in Japan on July 12, 2022, and the contents of the underlying application are incorporated by reference in their entirety.

### TECHNICAL FIELD

The present disclosure relates to information management technology.

### BACKGROUND INFORMATION

Patent Document 1 describes a supply chain management method in which a transaction record of an item is acquired from a trader forming a supply chain, and a hash value obtained by hashing the acquired transaction record is returned to the trader. The hash value provided to the trader is attached to the item shipped by the trader.

### [PRIOR ART DOCUMENT]

### [PATENT DOCUMENT]

[Patent Document 1] WO 2021/002226 A1

### SUMMARY

It is assumed that the type, format, amount and the like of transaction records recorded by each trader are different for trader to trader. Therefore, in the supply chain management method of acquiring transaction records from individual traders as in Patent Document 1, it is possible that data processing for storing transaction records becomes complicated due to the fact that the content of transaction records differs for trader to trader.

It is one objective of the present disclosure to provide an information management method and an information management device that can simplify data processing for information management.

In order to achieve the above object, one aspect of the present disclosure is an information management method that is implemented by a computer and manages information provided from a plurality of reporters constituting a supply chain. The method includes, in a process executed by at least one processor, steps of:
issuing, to a target terminal device linked to the reporter, item identification information for identifying an item shipped by the reporter, the item identification information being attached to the item;
acquiring, together with the item identification information, a stored hash value that is generated by hashing history information related to the item; and
storing the stored hash value in a database in association with the item identification information.

Further, another aspect of the present disclosure is an information management device that manages information provided by a plurality of reporters constituting a supply chain. The information management device includes:
an issuer that is configured to issue, to a target terminal device linked to the reporter, item identification information for identifying an item shipped by the reporter, the item identifying information being attached to the item;
an acquisition unit that is configured to acquire, together with the item identification information, a stored hash value that is generated by hashing history information related to the item; and
a storage unit that is configured to store the stored hash value in a database in association with the item identification information.

According to these aspects, a stored hash value obtained by hashing history information related to an item is acquired together with item identification information issued in advance, and is stored in a database in association with the item identification information. In such manner, according to the process of hashing history information and then transmitting it, the information acquired from each reporter can be fixed. In such manner, data processing for information management can be simplified.

Note that the reference symbols with parentheses in claims are only examples of the correspondence with the specific components in the embodiments, and do not limit the scope of the present disclosure. Further, claims that are not explicitly stated as combinable may also be combined if no particular problem arises in the combination.

### BRIEF DESCRIPTION OF THE DRAWINGS

FIG. 1 is a diagram showing an overall configuration of a traceability management system according to a first embodiment of the present disclosure;
FIG. 2 is a diagram showing a system, terminals, and the like related to traceability management;
FIG. 3 is a block diagram showing an electrical configuration of the traceability management system and a supplier terminal;
FIG. 4 is a diagram for explaining details of a hashing application;
FIG. 5 is a flowchart showing details of an application distribution process performed by an application distribution server;
FIG. 6 is a flowchart showing details of an application verification process mainly performed by a hash verifier of the information management server;
FIG. 7 is a flowchart showing details of an ID issuance process mainly performed by an issuer of the information management server;
FIG. 8 is a diagram for explaining details of item identification information and an attached label;
FIG. 9 is a flowchart showing details of a hash storage process performed by the information management server;
FIG. 10 is a flowchart showing details of an ID link process performed by (a) a manufacturer terminal or a supplier terminal and (b) the information management server;
FIG. 11 is a flowchart showing details of an ID verification process performed by the manufacturer terminal, the supplier terminal, the information management server, or the like;
FIG. 12 is a flowchart showing details of an ID output process performed by the supplier terminal;
FIG. 13 is a flowchart showing details of a history disclosure process mainly performed by a disclosure processor of the information management server;
FIG. 14 is a diagram showing an overall configuration of processes mainly performed by the traceability management system according to a second embodiment of the present disclosure;
FIG. 15 is a diagram showing an overall configuration of processes mainly performed by the traceability management system according to a third embodiment of the present disclosure; and
FIG. 16 is a diagram showing details of an inquiry system included in the traceability management system of Modification 3.

### EMBODIMENTS FOR CARRYING OUT INVENTION

The following will describe embodiments of the present disclosure with reference to accompanying drawings. In the following description, the same reference symbols are assigned to corresponding components in each embodiment in order to avoid repetitive descriptions. In each of the embodiments, when only a part of the configuration is described, the remaining parts of the configuration may adopt corresponding parts of other embodiments. Further, not only the combinations of the configurations explicitly shown in the description of the respective embodiments, but the configurations of multiple embodiments can be partially combined even when they are not explicitly shown as long as there is no difficulty in such combination in particular.

### (First Embodiment)

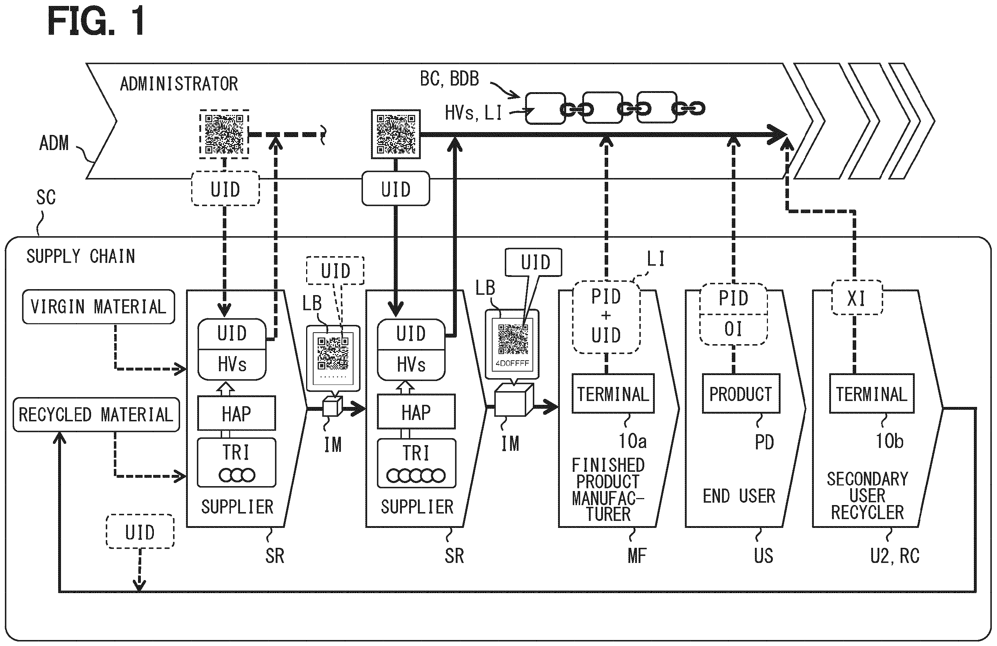

A supply chain SC in the first embodiment of the present disclosure shown in FIG. 1 is a connection between traders for delivering industrial products, agricultural products, marine products, and the like to end users US. The supply chain SC is constructed by including a plurality of suppliers SR and finished product manufacturers MF as traders. The final products PD supplied by the supply chain SC may be various articles, such as automobiles, batteries, semiconductors, fresh foods, marine products, foods, flowers, medicines, chemicals and the like.

As one specific example, in the supply chain SC for delivering industrial products to the end users US, material miners, material producers, processors, and the like are included as the suppliers SR. Each of the suppliers SR performs processing on raw materials such as virgin materials and recycled materials, or (and) item IM and the like delivered from a supplier SR in a previous process, and, in the next process, sends it to the supplier SR or ship it to a finished product manufacturer MF as a different item IM. The supply chain SC may further include carriers, distributors, and the like related to distribution of the item IM and the final product PD. Further, the end user US who uses the final product PD, a secondary user U2 who reuses, rebuilds, recycles and disposes the final product PD, a recycler RC, and the like may further be included in the supply chain SC.

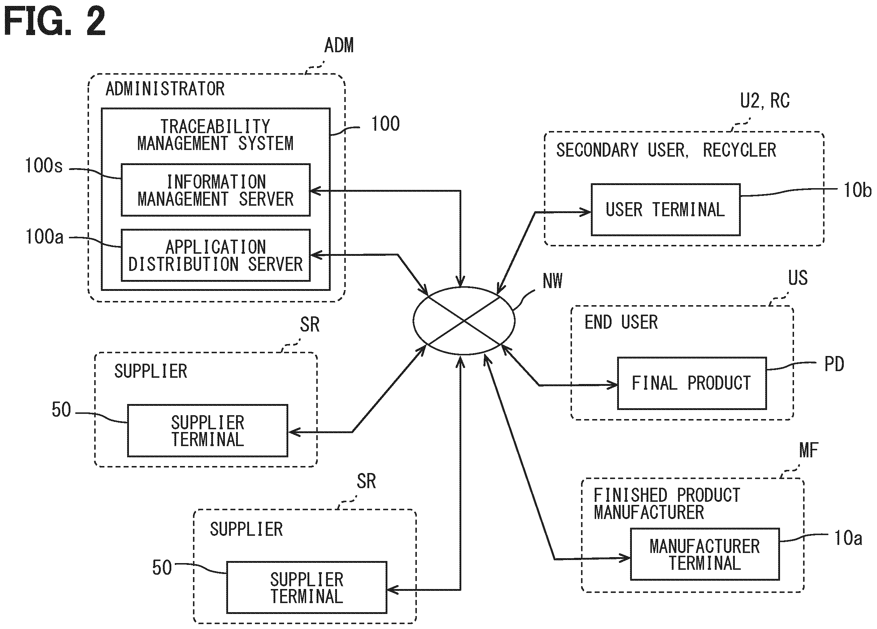

The supply chain SC is managed by an administrator ADM shown in FIGS. 1 and 2. The administrator ADM may be, for example, an agency entrusted with management duties by the finished product manufacturer MF, or may be an agency entrusted with management and audit duties by a regulatory agency that has authority of supervision over a category to which the final product PD belongs. The administrator ADM operates the traceability management system 100, and manages various information recorded in the supply chain SC.

The traceability management system 100 can communicate with a supplier terminal 50, a manufacturer terminal 10a, a user terminal 10b, and the like through a network NW When the final product PD (for example, an automobile, or the like) has a communication function, the traceability management system 100 may be capable of communicating with the final product PD. The traceability management system 100 stores information acquired through the network NW in a state that cannot be tampered with in practice. Further, the traceability management system 100 collects information under a control of individual suppliers SR, and the like in response to requests from the administrator ADM (or the regulatory agency), the end user US, the finished product manufacturer MF, and discloses the collected information to a requester.

The supplier terminal 50 is an information processing device operated by the supplier SR. The supplier terminal 50 is linked to each of the suppliers SR. The supplier terminal 50 accumulates history information TRI related to the item IM. The history information TRI is information such as from what kind of trading company (i.e., a supplier SR in the previous process) raw materials, parts or the like are purchased, and when they are obtained. Further, information related to cost, an amount of greenhouse gas emissions (i.e., carbon footprint) emitted by manufacturing the item IM, and the like may be recorded as the history information TRI.

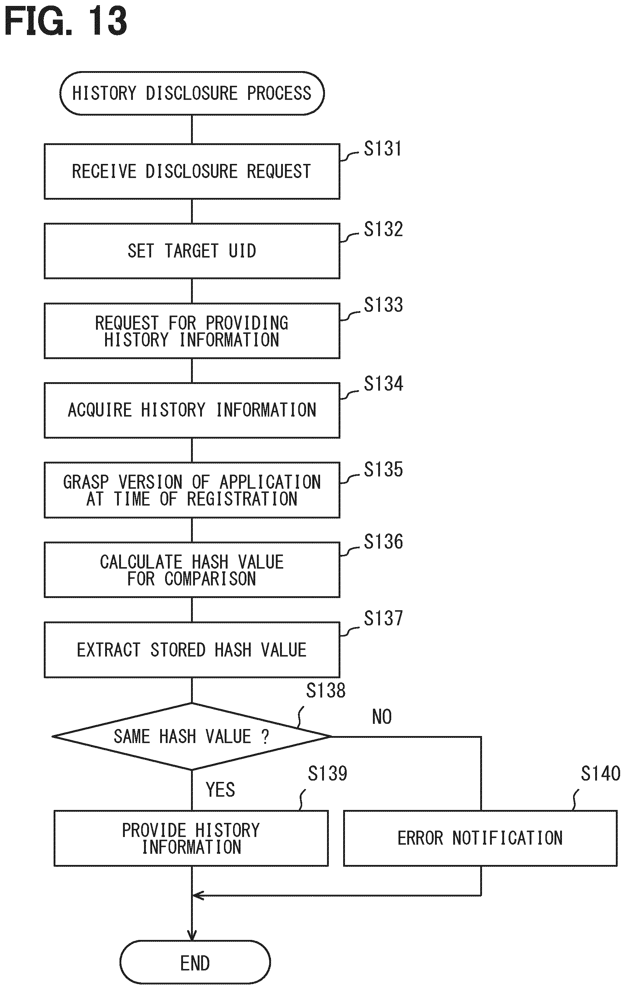

The history information TRI is stored in the supplier terminal 50, and is disclosed to an outside according to a situation. For example, when a problem occurs or is likely to occur in the item IM or the final product PD, the history information TRI will be provided to other traders via the administrator ADM by an information disclosure process (see FIG. 13) described below, or to the end user US, or the like. The provided history information TRI is used for investigating a cause of a fault, or the like. As described above, at least a part of the history information TRI serves as information for realizing traceability of the item IM.

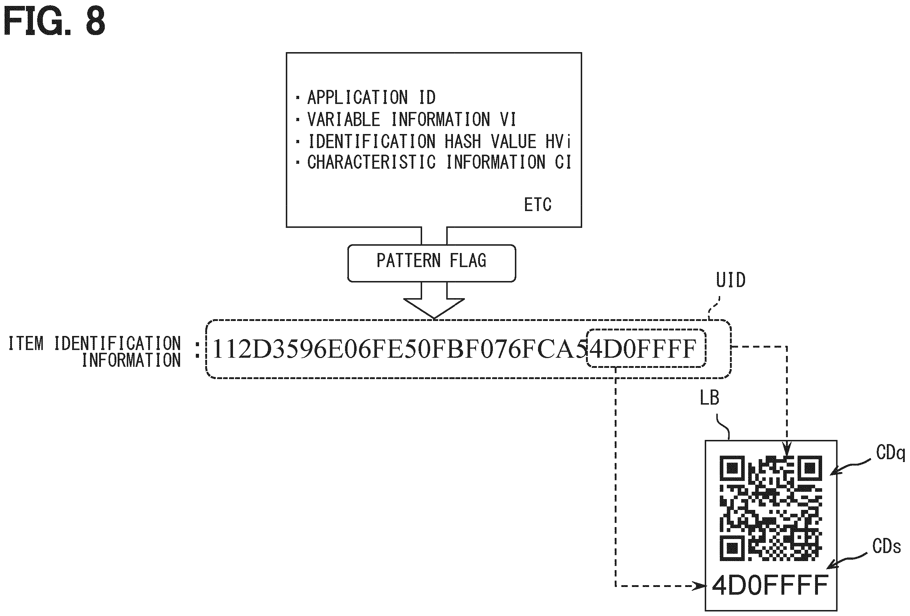

The supplier terminal 50 receives, from the traceability management system 100, an issuance of unique identification information (i.e., hereinafter referred to as item identification information UID) for identifying the item IM. The item identification information UID is a unique identification that does not overlap with other ID (see FIG. 8). The item identification information UID may be issued, for example, not only for parts or the like but also for recycled materials or the like. The item identification information UID is attached to the item IM shipped from the supplier SR, and delivered together with the item IM to the in the trader next process. For a specific item IM, the supplier terminal 50 associates a hash value generated from the history information TRI (hereinafter referred to as a stored hash value HVs) with an issued item identification information UID, and uploads it to the traceability management system 100.

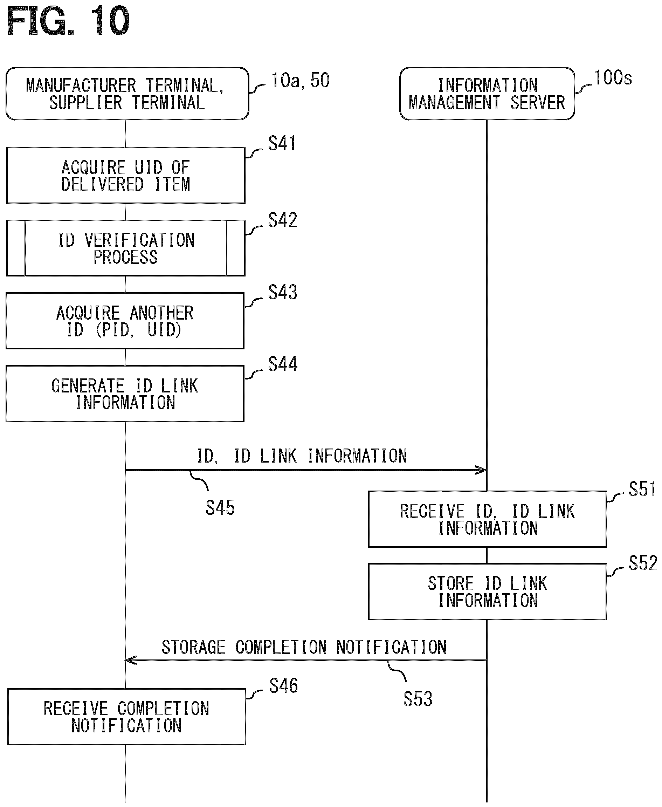

The manufacturer terminal 10a is an information processing device operated by the finished product manufacturer MF. In an ID link process (see FIG. 10), which will be described later, the manufacturer terminal 10a generates information that links the final product PD shipped from the finished product manufacturer MF and one or more items IM used in the final product PD. Specifically, ID link information LI that links (a) the item identification information UID attached to the item IM and (b) product identification information PID that identifies the final product PD manufactured using the item IM is generated as linking information. The final product PD becomes a related object related to the item IM. When multiple items IM are used for one final product PD, multiple pieces of the ID link information LI are generated. The manufacturer terminal 10a uploads the generated one or more pieces of the ID link information LI to the traceability management system 100.

Note that the ID link process is also performed in the supplier terminal 50 as well as at the manufacturer terminal 10a. The supplier terminal 50 generates ID link information LI that links the item identification information UID of the shipped-in item IM or recycled material with the item identification information UID of the item IM to be shipped. The supplier terminal 50 uploads the generated one or more ID link information LI to the traceability management system 100.

The user terminal 10b is an information processing device operated by the secondary user U2 or the recycler RC. For example, a smartphone, a tablet terminal, or the like can be used as the user terminal 10b. When the final product PD is disassembled by the recycler RC and a usage mode of the item IM used in the final product PD is changed, the user terminal 10b uploads change information XI to the traceability management system 100.

Specifically, when the item IM is discarded by the secondary user U2 or recycled into recycled materials by the recycler RC, the traceability management system 100 is notified of change information XI indicating disappearance of the item IM. Further, when the item IM is reused in another final product PD by the secondary user U2, or when the item IM taken out from the final product PD is used for another purpose, the change information XI requesting modification or transfer of the ID link information LI is notified. For example, when a battery pack for driving a vehicle taken out from an electric vehicle is used (a) as a replacement battery for another vehicle, or (b) as a stationary storage battery or a backup storage battery in case of a power outage, the traceability management system 100 is notified of the change information XI.

The final product PD collects operational information OI as it is used by the end user US. For example, when the final product PD is an electric vehicle, mileage, charging/discharging history, current value of battery capacity (State of Health, SOH), and the like are collected as the operational information OI. The final product PD links its own product identification information PID to the collected operation information OI, and uploads it to the traceability management system 100. Note that at least one of collecting and uploading the operational information OI may be performed by the user terminal 10b or the like owned by the end user US.

Next, details of the traceability management system 100 and the supplier terminal 50 will be further explained based on FIGS. 1 to 4.

The traceability management system 100 includes an application distribution server 100a and an information management server 100s. The application distribution server 100a and the information management server 100s are information processing devices including a control circuit 100c as a main component. The control circuit 100c includes a processor 11, a RAM (Random Access Memory) 12, a storage 13, an input/output interface 14, a bus connecting these components and the like, and functions as a computer that performs arithmetic processing. The processor 11 is hardware for arithmetic processing coupled with the RAM 12, and executes a program stored in the storage 13.

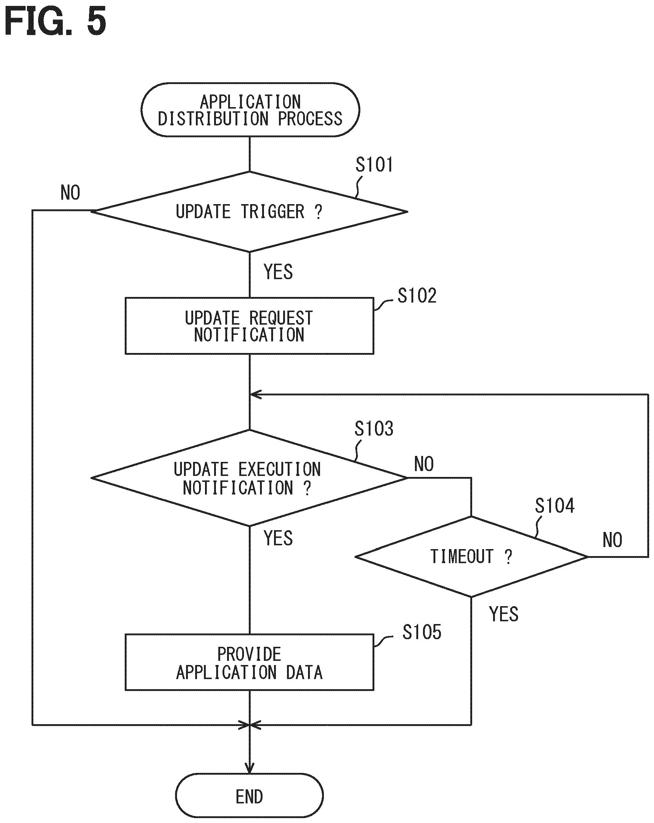

The application distribution server 100a functions as a server device that distributes a hashing application HAP. The hashing application HAP is an application program installed on each of the supplier terminals 50. The hashing application HAP performs a hashing process in each of the supplier terminals 50 to hash pre-processing data at least including the history information TRI based on rules specified by the administrator ADM, and generates a stored hash value HVs. The pre-processing data is original data before performing the hashing process. The hashing application HAP enables maintaining security in traceability management through periodical updates. The application distribution server 100a provides a latest hashing application HAP to each of the supplier terminals 50 by performing an application distribution process (see FIG. 5) in the control circuit 100c based on an application distribution program.

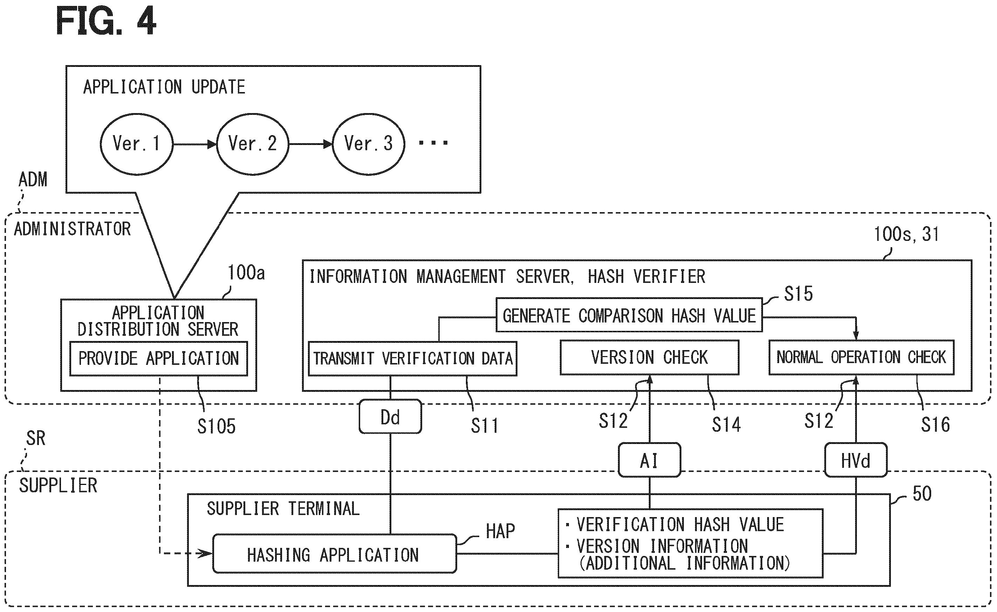

The application distribution server 100a determines whether there is an update trigger in the application distribution process (S101). For example, version information and expiration date of the hashing application HAP can be used as an update trigger. Based on the version information of the hashing application HAP, the application distribution server 100a validates the update trigger when the version of the hashing application HAP specified by the administrator ADM is updated (see FIG. 4) (S101: YES). Also, the update trigger may be validated when a supplier terminal 50 using an old version of the hashing application HAP that is no longer usable is identified based on the expiration date of the hashing application HAP. Based on the validation of the update trigger, the application distribution server 100a transmits a notification requesting an update of the application to the supplier terminal 50 which is a target of update (S102).

After transmitting the update request notification, the application distribution server 100a waits for a reply from the supplier terminal 50 until (a)a predetermined waiting time elapses or (b) a specified number of errors occur, resulting in a timeout (S104: YES). When the application distribution server 100a receives an update execution notification from the supplier terminal 50 that has received the update request notification (S103: YES), the application distribution server 100a provides program data of the latest hashing application HAP to the supplier terminal 50 (S105, see also a broken line arrow in FIG. 4).

Note that version confirmation of the hashing application HAP is not limited only to (i) being performed starting from an administrator ADM side, but (ii) being performed starting from a supplier SR side (by the supplier terminal 50). Specifically, after starting the system, the supplier terminal 50 inquires of the application distribution server 100a or the information management server 100s about the validity of the hashing application HAP that it has. When receiving an inquiry result indicating that the hashing application HAP is valid, the supplier terminal 50 generates and uploads a hash value, which will be described later. On the other hand, when receiving an inquiry result that the hashing application HAP is invalid, the supplier terminal 50 requests the application distribution server 100a to provide the latest hashing application HAP, and performs an update to the latest hashing application HAP.

Further, the hashing application HAP may be distributed by a platformer of an operating system that operates the supplier terminal 50, for example. In such a form, the latest hashing application HAP is provided from the administrator ADM to the platformer, and is then distributed to each of the supplier terminals 50 from a server device operated by the platformer.

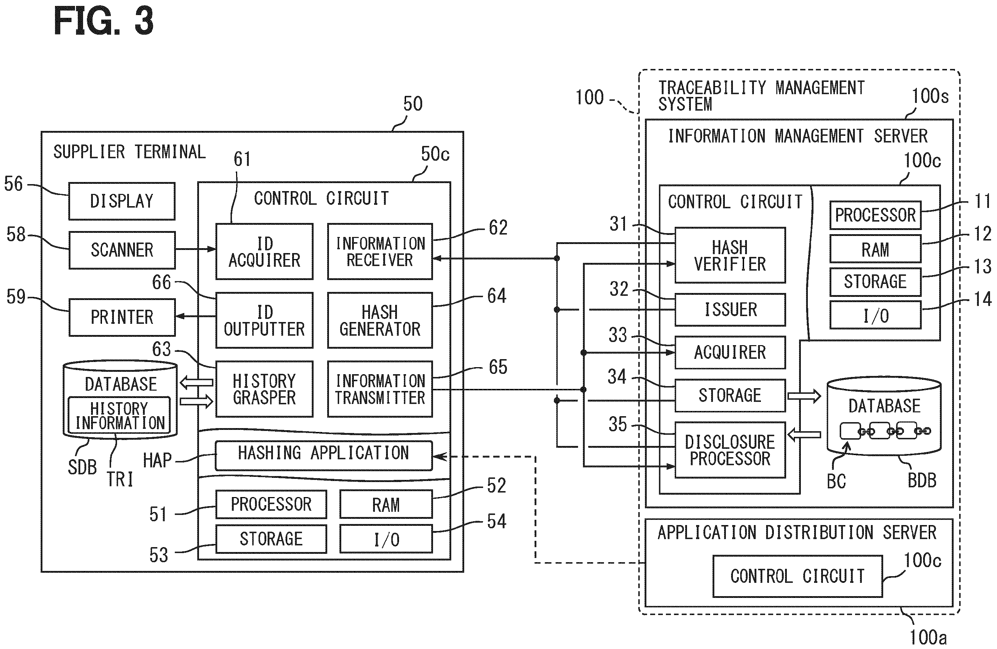

The information management server 100s functions as an information management device that manages information related to an item IM. The storage 13 of the information management server 100s stores an information management program for causing the control circuit 100c to perform an information management method according to the present disclosure. The information management server 100s provides functional units such as a hash verifier 31, an issuer 32, an acquirer 33, a storage 34 and the like by executing the information management program by the processor 11 (see FIG. 3).

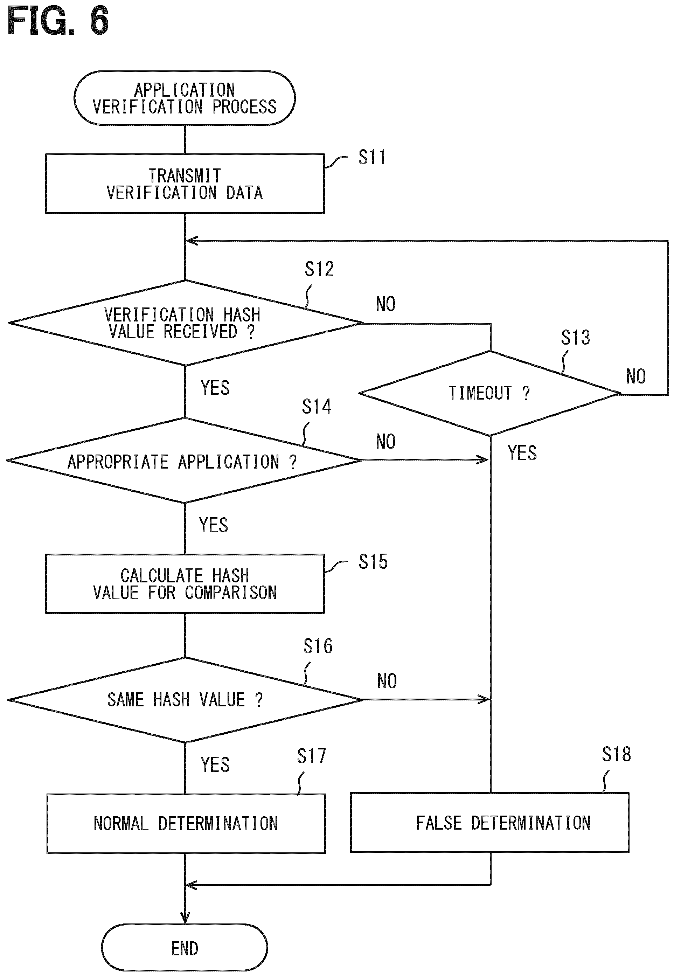

The hash verifier 31 verifies validity of the stored hash value HVs obtained from the supplier terminal 50. Specifically, by performing the application verification process (see FIG. 6), the hash verifier 31 confirms (a) whether the stored hash value HVs has been generated by the hashing application HAP specified by the administrator ADM, and (b) whether the stored hash value HVs has been generated correctly (see a solid line arrow in FIG. 4).

The hash verifier 31 can perform the application verification process at an arbitrary timing. Specifically, when the hashing application HAP is updated on the supplier terminal 50, the application verification process may be performed (i) after an issuance of an item identification information UID, (ii) after receiving the stored hash value HVs, (iii) after lapse of a predetermined period of time from a previous verification.

The hash verifier 31 provides verification data Dd to the supplier terminal 50 by transmitting the verification data Dd thereto in the application verification process (S11). The verification data Dd is dummy data that is input to the hashing application HAP in the supplier terminal 50 instead of the history information TRI. The hash verifier 31 receives a hash value (hereinafter referred to as a verification hash value HVd) generated by the hashing process using the verification data Dd in the hashing application HAP by receiving it from the supplier terminal 50 (S12). (See also FIG. 4). The hash verifier 31 acquires the verification hash value HVd as well as additional information AI (see FIG. 4). The additional information AI includes at least a character string indicating a provider of the hashing application HAP and a version of the hashing application HAP.

After transmitting the verification data Dd, the hash verifier 31 waits for a reply of the verification hash value HVd until a predetermined waiting time has elapsed. When the hash verifier 31 times out (S13: YES) due to the elapse of a predetermined waiting time, the hash verifier 31 makes a false determination to the effect that the validity of the stored hash value HVs cannot be guaranteed (S18).

When the hash verifier 31 receives the verification hash value HVd and the additional information AI (S12: YES), the hash verifier 31 determines whether or not an appropriate hashing application HAP is operating on the supplier terminal 50 based on the additional information AI (S14; see also FIG. 4). For example, when an inappropriate hashing application HAP, such as an application of unknown origin or an old version that is no longer usable, is used on the supplier terminal 50 (S14: NO), the hash verifier 31 makes an false determination (S18).

When the hash verifier 31 determines that an appropriate hashing application HAP is being used in the supplier terminal 50 (S14: YES), the hash verifier 31 calculates a hash value for comparison (S15, see also FIG. 4). The hash value for comparison is a value calculated when the verification data Dd is input to the hashing application HAP of the version indicated by the additional information AI.

The hash verifier 31 compares the received verification hash value HVd with a hash value for comparison in order to check whether the hashing application HAP is operating normally (S16, see also FIG. 4). When the verification hash value HVd is different from the hash value for comparison (S16: NO), the hash verifier 31 makes an false determination (S18). On the other hand, when the verification hash value HVd is the same as the hash value for comparison (S16: YES), the hash verifier 31 determines that the hashing application HAP is operating normally on the supplier terminal 50, and it is determined as a state in which the validity of the stored hash value HVs is guaranteed (S17). As described above, the hash verifier 31 can verify the operation of the hashing application HAP without requesting the supplier terminal 50 to disclose the history information TRI.

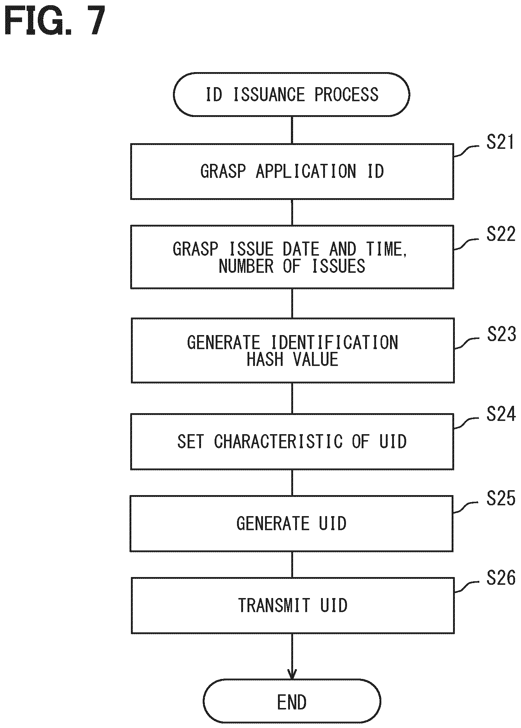

The issuer 32 issues the above-mentioned item identification information UID (see also FIG. 8) to the supplier terminal 50 linked to each of the suppliers SR, by performing an ID issuance process (see FIG. 7). The item identification information UID is, for example, a 32-digit character string. The issuer 32 performs the ID issuance process in response to a request from, for example, a supplier SR (i.e., a supplier terminal 50), and issues the item identification information UID required by the supplier SR, by the number of items requested by the supplier SR. Further to issuing the item identification information UID as needed, the issuer 32 can perform batch processing in which the item identification information UID is issued on demand by a predetermined number of items, in response to a request from the supplier terminal 50.

In the ID issuance process, the issuer 32 grasps information (hereinafter, an application ID, see FIG. 8) that identifies the application (i.e., the traceability management system 100) that performs information management (S21). Further, the issuer 32 grasps (a) an issue date and time of the item identification information UID and (b) the number of the item identification information UIDs to be issued at one time (hereinafter referred to as the number of issues) (S22).

The application ID is a value that does not change every time the item identification information UID is issued, and is a fixed character string set in advance. The application ID is information that identifies the issuer (i.e., an administrator ADM), a purpose, a field of use, and the like regarding the item identification information UID. The application ID may be changed for an issuee to an issuee (i.e., a supplier SR). In such a case, the application ID can also be used as information for identifying the issuee of the item identification information UID. The issue date and time and the number of issues are values that change every time the item identification information UID is issued, and, in other words, they are variable information VI (see FIG. 8) that changes from item IM to item IM. The randomness of the item identification information UID may be raised by using such variable information VI. Further, in order to compensate for the difficulty of use caused by excessive randomness, it may be OK to use a readable code CDs (see FIG. 8), described later, a part of which (e.g., for the last few digits) is arranged as a series number, to improve workability.

The issuer 32 generates a hash value (hereinafter, identification hash value HVi, see FIG. 8) by hashing the original data including at least the application ID and the variable information VI (S23). Further, the issuer 32 sets a code version, a pattern flag, and an activation deadline of the item identification information UID (S24). The code version, the pattern flag, and the activation deadline are characteristic information CI (see FIG. 8) that indicates the characteristics of item identification information UID.

The code version is, for example, an identifier indicating a version of the item identification information UID. The pattern flag is an identifier that specifies a scrambling rule used to generate the item identification information UID. By using the pattern flag, it is possible to grasp the scrambling rules and to perform decoding to descramble without accessing the information management server 100s. The activation deadline is information indicating an end of a period during which the item identification information UID is validly usable in the traceability management system 100. The item identification information UID whose activation deadline has expired cannot be handled by the information management server 100s and the hashing application HAP.

The issuer 32 generates the item identification information UID using the application ID, the variable information VI, the identification hash value HVi, and the characteristic information CI (S25). Specifically, the issuer 32 converts (i) the original data including the application ID and the variable information VI and (ii) the identification hash value HVi into a fixed-length character string based on the scrambling rule corresponding to the pattern flag. According to a scrambling process, a disordered character string that is different from the one before conversion, without damaging the original content, is generated. Therefore, the application ID, the variable information VI, and the identification hash value HVi are embedded in the item identification information UID in a restorable (combinable) state. In addition, the issuer 32 mixes the code version, the pattern flag, and the activation deadline into a predefined position (for example, at the beginning) of the item identification information UID (i.e., the character string). Further, the issuer 32 mixes the variable information VI such as an issuing time and the number of issues into a predefined position (for example, at the end) of the item identification information UID (i.e., the character string). The issuer 32 transmits the generated item identification information UID to the supplier terminal 50 that is a requester of issuing (S26). The application verification process (see FIG. 6) by the hash verifier 31 may be performed after issuance of the item identification information UID by the issuer 32.

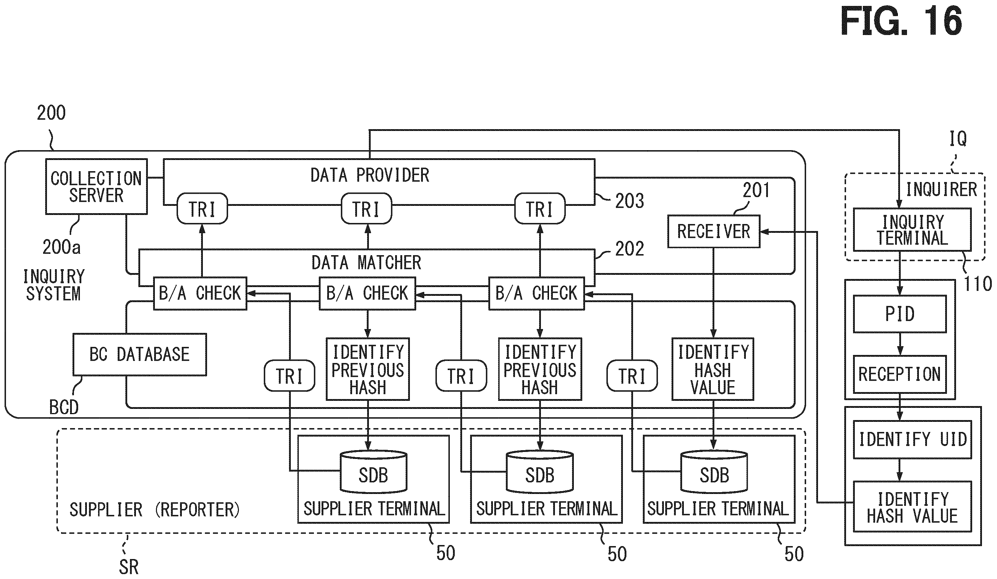

The acquirer 33 acquires information transmitted from the supplier terminal 50. The storage 34 stores the information acquired by the acquirer 33 in a blockchain database (hereinafter, BC database, see also FIG. 16) BDB. The BC database BDB uses a technology of a blockchain BC to store storage target data, such as the stored hash values HVs, the additional information AI, the ID link information LI, and the like in a state that cannot be substantially tampered with. As an example, the BC database BDB stores the acquired storage target data as a transaction in a block of a private-type blockchain BC. The BC database BDB makes it difficult to tamper with the storage target data stored in each block by (i) hashing information stored in one block and (ii) storing it in the next block. As another example, the BC database BDB may store hash values generated from the storage target data stored in blocks of a consortium-type or a public-type blockchain BC, making it virtually impossible to tamper with the storage target data. Further, as a configuration corresponding to the BC database BDB, a server for storing a blockchain BC (hereinafter referred to as a BC server) and a database server for storing other storage target data may be separately provided. Further, only the server that stores a blockchain BC may be operated.

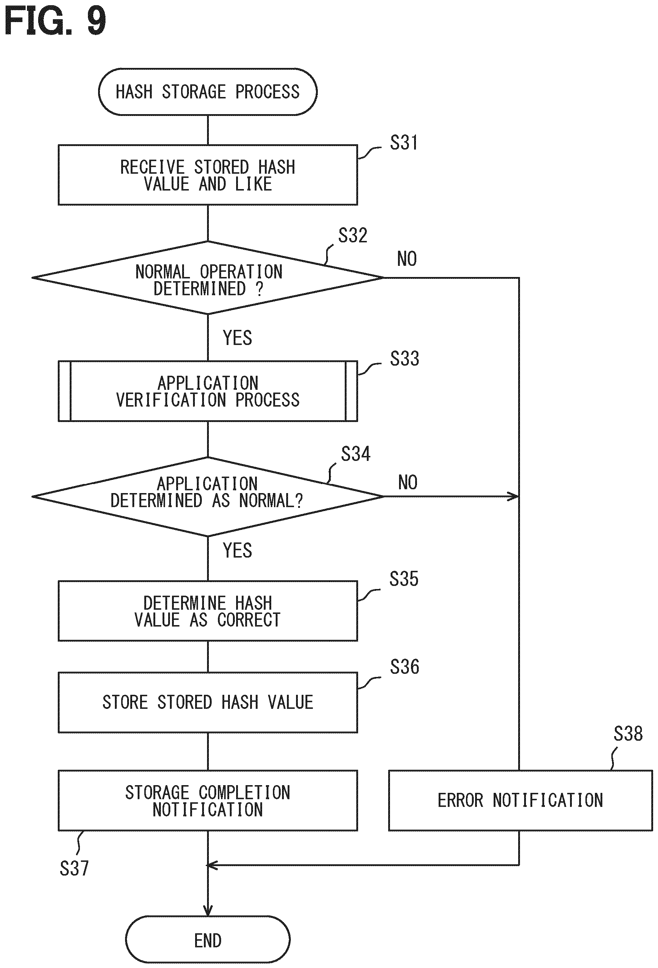

The acquirer 33 and the storage 34 store the stored hash value HVs and the like acquired from the supplier terminal 50 in the BC database BDB by performing a hash storage process (see FIG. 9). In the hash storage process, the acquirer 33 acquires the stored hash value HVs, the additional information AI, and the like together with the item identification information UID by receiving them from the supplier terminal 50 (S31). For example, after issuing the item identification information UID or in a similar situation, the acquirer 33 determines, with reference to a result of the most recent application verification process (see FIG. 6), for example, whether the hashing application HAP is operating normally on the supplier terminal 50 (S32).

If an false determination has been made in the most recent application verification process (S32: NO), the storage 34 transmits an error notification to the supplier terminal 50 (S38), notifying that the stored hash value HVs has not be stored. On the other hand, when a normal determination has been made in the most recent application verification process (S32: YES), the application verification process (see FIG. 6) by the hash verifier 31 is performed again (S33). When a false determination is made again in the application verification process (S34: NO), an error notification is also transmitted to the supplier terminal 50 (S38). When a normal determination is made again in the application verification process (S34: YES), that is, when the verification hash value HVd is a correct value, the hash verifier 31 determines that the stored hash value acquired this time is also correct (S35). Note that the application verification process (S34) after receiving the stored hash value HVs may be omitted.

Based on the validity of the stored hash value HVs being confirmed by the hash verifier 31, the storage 34 stores the stored hash value HVs, the additional information AI and the like in the BC database BDB in association with the item identification information UID (S36). In addition, the storage 34 also stores an issuance history indicating the issuer (i.e., a supplier SR) of the item identification information UID in the BC database BDB in association with the item identification information UID. The storage 34 transmits a storage completion notification to the supplier terminal 50, which notifies a completion of storage of the stored hash value HVs, and the like (S37).

The supplier terminal 50 has a configuration in which a control circuit 50c is included as a main component. The control circuit 50c includes a processor 51, a RAM 52, a storage 53, an input/output interface 54, a bus connecting these and the like, and functions as a computer that performs arithmetic processing. The processor 51 is hardware for arithmetic processing coupled with the RAM 52, and executes an application program (i.e., the hashing application HAP) stored in the storage 53. A display 56, a scanner 58, a printer 59, and the like are electrically connected to the input/output interface 54. Further, an input device such as a keyboard may be connected to the supplier terminal 50, for example, for error handling and the like.

The display 56 is a display device using a liquid crystal panel or an organic EL panel as a main component. The display 56 displays various images on a screen based on a display control by the control circuit 50c. For example, the display 56 displays (a) an image presenting the history information TRI based on provision data, (b) an image notifying error information received from the information management server 100s, and the like. The display 56 may have a touch panel function that accepts user operations performed thereon.

The scanner 58 is a reading device that reads an attached label LB (see FIG. 8). The scanner 58 includes, for example, an area sensor formed by a two-dimensional array of CCD elements. The attached label LB is a paper medium, a film medium or the like, on which a two-dimensional code CDq, a readable code CDs, and the like are printed. The two-dimensional code CDq is, for example, a QR code (registered trademark). The item identification information UID is recorded in the two-dimensional code CDq. The readable code CDs is a character string of a predetermined length, and is a character string corresponding to a part of the item identification information UID. As an example, the last seven digits of the item identification information UID are used as a readable code CDs, and are written on the attached label LB in a state readable by a user of the supplier terminal 50. The scanner 58 reads the two-dimensional code CDq printed on the attached label LB, and outputs the item identification information UID extracted from the two-dimensional code CDq to the control circuit 50c. Note that the two-dimensional code CDq and the readable code CDs may be displayed on a display device such as a display or an electronic paper. In such a case, a display device such as a display or an electronic paper corresponds to the attached label LB.

The printer 59 is an output device that outputs the attached label LB. The printer 59 acquires, from the control circuit 50c, data of a two-dimensional code CDq and a readable code CDs generated from new item identification information UID provided by the information management server 100s. The printer 59 prints the two-dimensional code CDq and the readable code CDs on a paper medium (such as a sticker or the like), and outputs it as an attached label LB. The attached label LB is attached to an outer surface of the item IM, for example, and is distributed together with the item IM. A position where the attached label LB is attached is not limited to the item itself, but may also be on a package, a tag, a wrapping, a certificate, or the like. Note that, instead of the attached label LB output on demand from the printer 59, an attached label LB printed and issued in advance by the administrator ADM and supplied to the supplier SR may be distributed together with the item IM. Further, the two-dimensional code CDq may be laser-engraved or printed directly on the item IM. In such a case, instead of the printer 59, a laser marker, an inkjet printer, or the like can be used as the output device.

Here, instead of the two-dimensional code CDq, a one-dimensional code such as a barcode recording the item identification information UID may be printed on the attached label LB. Further, the item identification information UID may be recorded as electronic data on a recording medium such as an RFID (Radio Frequency IDentifier), a microchip or the like attached to the item IM. Even in such a form, the readable code CDs is printed on an outer surface of the recording medium or on a label containing the recording medium so that it can be read by the user.

Further, in case that the item identification information UID is recorded on an RFID, a microchip, or the like, the supplier terminal 50 includes a reader and a writer as a reading device and an output device. The reader reads the item identification information UID recorded as electronic data on a storage medium, and outputs it to the control circuit 50c. The writer writes electronic data of the item identification information UID generated by the control circuit 50c on the storage medium.

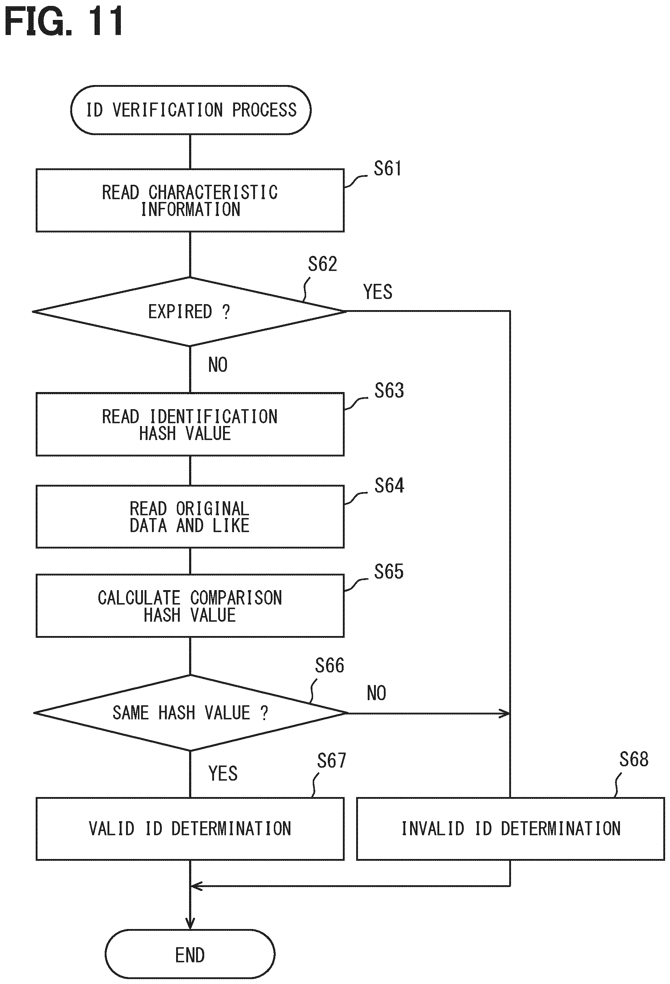

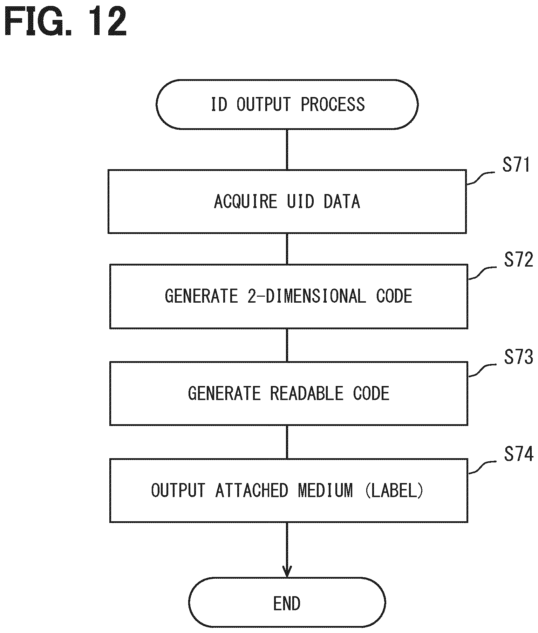

The supplier terminal 50 has functional units such as an ID acquirer 61, an information receiver 62, a history grasper 63, a hash generator 64, an information transmitter 65, an ID outputter 66 and the like, by executing the hashing application HAP by the processor 51 (See FIG. 3). The supplier terminal 50 performs the ID link process (see FIG. 10), an ID verification process (see FIG. 11), and an ID output process (see FIG. 12) through cooperation between functional units. Note that, as described above, the ID link process is also performed by the manufacturer terminal 10a of the finished product manufacturer MF to which the item IM has been delivered. That is, functional units corresponding to the ID acquirer 61, the information receiver 62, and the information transmitter 65 are also implemented in the manufacturer terminal 10a.

The ID acquirer 61 is connected to the scanner 58. In the ID link process (see FIG. 10), the ID acquirer 61 acquires data of the item identification information UID from the scanner 58 that has read the attached label LB of the item IM delivered to the supplier SR (S41). The ID acquirer 61 confirms whether the acquired item identification information UID is valid information by ID verification process (S42).

In the ID verification process (see FIG. 11), the ID acquirer 61 reads characteristic information CI (see FIG. 8) from a character string of the item identification information UID (S61). Specifically, the ID acquirer 61 acquires a code version, a pattern flag, and an activation deadline of the item identification information UID. The ID acquirer 61 determines whether the item identification information UID is an ID within a valid period based on the activation deadline (S62).

When determining that the item identification information UID has expired (S62: YES), the ID acquirer 61 determines that the item identification information UID is an invalid ID (S68). In such a case, a notification indicating that the item identification information UID is invalid (hereinafter referred to as an ID invalidation notification) is displayed on the display 56. The last seven digits of the invalid item identification information UID are displayed on the display 56 together with the ID invalidation notification. Thereby, the user (i.e., a worker) can identify the item IM to which the invalid item identification information UID is attached by finding the attached label LB that includes the same readable code CDs as the 7-digit character string.

When the ID acquirer 61 determines that the item identification information UID is a valid ID (S62: NO), the ID acquirer 61 decodes the scrambled item identification information UID based on information regarding the code version and the pattern flag. By decoding the item identification information UID described above, the ID acquirer 61 reads information such as the application ID and the like (S63 and S64).

The ID acquirer 61 calculates a hash value for comparison to be compared with the identification hash value HVi using each of the values regarding the application ID, the issue date and time, and the number of issues (S65). The hash value for comparison is calculated by the same calculation method as the generation process of the identification hash value HVi in the issuer 32.

The ID acquirer 61 compares the read identification hash value HVi with the hash value for comparison (S66). When the identification hash value HVi is different from the hash value for comparison (S66: NO), the ID acquirer 61 determines that the item identification information UID is an invalid ID (S68), and displays an ID invalidation notification on the display 56. On the other hand, when the identification hash value HVi is the same as the hash value for comparison (S66: YES), the ID acquirer 61 determines that the item identification information UID is a valid ID (S67).

Here, a detailed determination function for determining whether the item identification information UID is valid or invalid may be provided by the traceability management system 100. In such a case, the supplier terminal 50 refers to a determination result notified from the traceability management system 100, and determines whether the item identification information UID is a valid ID. Further, the above-described ID verification process may be implemented by the manufacturer terminal 10a. For example, the manufacturer terminal 10a performs the ID verification process at a timing of acquiring the item identification information UID of the item IM delivered to the finished product manufacturer MF, and determines whether the item identification information UID of the item IM is a valid ID or not.

The information receiver 62 requests the issuer 32 to issue the item identification information UID to be attached to the item IM shipped from the supplier SR. The information receiver 62 acquires the item identification information UID issued by the issuer 32, by receiving it from the information management server 100s in the ID link process (see FIG. 10) (S43). The information receiver 62 generates the ID link information LI that links the received new item identification information UID to the item identification information UID acquired from the shipped-in item IM (S44). Further, the information receiver 62 receives the verification data Dd (see FIG. 4) from the hash verifier 31 that performs the application verification process (see FIG. 6). Note that when the ID link process is performed at the manufacturer terminal 10a, the product identification information PID is acquired as another ID to be linked to the item identification information UID (S43).

The history grasper 63 acquires the history information TRI generated by the supplier SR. The history grasper 63 may automatically acquire data serving as the history information TRI from other server device(s) installed at a base of the supplier SR, or may acquire data manually input by the user as the history information TRI. The history grasper 63 stores the history information TRI in a supplier database SDB in a state where it is linked to the item identification information UID acquired by the ID acquirer 61. The information stored in the supplier database SDB is only the history information TRI, in other words, only the original data of the information to be hashed. Information that is not stored in the supplier database SDB may be deleted after confirming an intention of deletion every time the information is deleted. Further, the history grasper 63 extracts, from among the history information TRI accumulated in the supplier database SDB, information linked to a specified item identification information UID based on a request from the information management server 100s that performs a history disclosure process (see FIG. 13) which is described later.

The hash generator 64 prepares the pre-processing data so as to include the history information TRI grasped by the history grasper 63. The hash generator 64 hashes the pre-processing data, and generates a stored hash value HVs. Further, when the information receiver 62 receives the verification data Dd (see FIG. 4), the hash generator 64 prepares the pre-processing data that includes the verification data Dd in place of the history information TRI. The hash generator 64 generates a verification hash value HVd (see FIG. 4) by hashing the pre-processing data including the verification data Dd. Further, in conjunction with the generation of the stored hash value HVs and the verification hash value HVd, the hash generator 64 further generates the additional information AI (see FIG. 4) that includes the version information of the hashing application HAP that has performed the hashing process.

The information transmitter 65 sequentially transmits, to the acquirer 33, the stored hash value HVs, the verification hash value HVd, and the additional information AI generated by the hash generator 64. In addition, in the ID link process, the information transmitting unit 65 transmits, to the acquirer 33, the ID link information LI and an ID linked by this ID link information LI (see FIG. 10) (S45). The ID and the ID link information LI are acquired by the acquirer 33 (S51), and are stored in the BC database BDB by the storage 34 (S52). Then, a notification indicating the completion of storage of the ID link information LI is provided from the storage 34 to the information receiver 62 (S53 and S46).

The ID outputter 66 is connected to the printer 59. The ID outputter 66 causes the printer 59 to output the attached label LB by performing the ID output process (see FIG. 12). The ID outputter 66 acquires data of the item identification information UID received by the information receiver 62 (S71). The ID outputter 66 generates a two-dimensional code CDq (see FIG. 8) recording the item identification information UID and a readable code CDs (see FIG. 8) obtained by cutting out a part of the item identification information UID (S72 and S73). ). The ID outputter 66 outputs print data including the two-dimensional code CDq and the readable code CDs to the printer 59 (S74), and causes the printer 59 to print the attached label LB.

Note that, as described above, in case that the attached label LB on which the item identification information UID is printed is provided by the administrator ADM, the ID outputter 66 and the printer 59 do not need to be provided in the supplier terminal 50. In such a case, the ID output process performed in the supplier terminal 50 is also omitted.

Next, details of information disclosure performed by the traceability management system 100 will be further explained. The information management server 100s also functions as an information providing device that provides information related to the item IM. The storage 13 of the information management server 100s further stores the information providing program for causing the control circuit 100c to implement the information providing method according to the present disclosure. The information management server 100s further includes a disclosure processor 35 as a functional unit, which is implemented by the processor 11 that executes the information providing program.

The disclosure processor 35 makes it possible to provide the history information TRI by performing the history disclosure process (see FIG. 13). The disclosure processor 35 receives a request for disclosure of the history information TRI from the manufacturer terminal 10a, the user terminal 10b, or the like (S131). The product identification information PID or the item identification information UID is attached to the request for disclosure as information identifying the final product PD or the item IM that is a target of the request. The disclosure processor 35 refers to the BC database BDB, extracts the ID link information LI related to the identified product identification information PID or the identified item identification information UID, and sets at least one item identification information UID that is a target for collecting the history information TRI (S132).

The disclosure processor 35 refers to the issuance history of the BC database BDB, and identifies the supplier SR that requests for provision of the history information TRI. The disclosure processor 35 transmits a request for providing the history information TRI along with the item identification information UID to the supplier terminal 50 of the identified supplier SR (S133). The disclosure processor 35 acquires the history information TRI in response from the supplier terminal 50 based on the request for providing the information (S134).

The disclosure processor 35 grasps the version information of the hashing application HAP used for the hashing process of the acquired history information TRI (S135). The version information may be extracted from the BC database BDB or may be received from the supplier terminal 50 together with the history information TRI. The disclosure processor 35 calculates a hash value for comparison (S136) by performing the hashing process on the acquired history information TRI, which is the same hashing process as the hashing application HAP indicated by the version information.

The disclosure processor 35 extracts the stored hash value HVs linked to the item identification information UID from the BC database BDB (S137), and compares the stored hash value HVs with the re-calculated hash value for comparison (S138). When the hash value for comparison is different from the stored hash value HVs (S138: NO), an error notification indicating that the history information TRI may have possibly been tampered with is transmitted to the requester of the request for disclosure, the requestee of information provision, and the like (S140). On the other hand, when the hash value for comparison is the same as the stored hash value HVs (S138: YES), the disclosure processor 35 assumes that the history information TRI has not been tampered with.

The disclosure processor 35 repeats the processes of S133 to S138 when there is a plurality of item identification information UIDs from which the history information TRI is collected. When the disclosure processor 35 completes the verification of all the history information TRI, the disclosure processor 35 provides the collected history information TRI to the requester of the request for disclosure (S139).

In the first embodiment described so far, the stored hash value HVs obtained by hashing the history information TRI that is related to the item IM is acquired together with the item identification information UID issued in advance. Then, the stored hash value HVs is stored in the BC database BDB in a state where it is linked to the item identification information UID. In such manner, according to the process of hashing the history information TRI and then transmitting it, the information acquired from each of the suppliers SR, specifically, the data amount, data length, and the like can be fixed. In such manner, data processing for information management can be simplified.

To be more specific, the history information TRI has different types, different formats, different data amounts, and the like regarding recorded files from the supplier SR to the supplier SR. Further, management items, granularity, and the like recorded as the history information TRI may also vary (a) from time to time or (b) over time. Further, it is assumed that the number and order of processing steps for processing the item IM, and the like will also vary over time. Further, it is also assumed that there may be a need to construct the traceability management system 100 at a stage when the recording method of the history information TRI has not been determined in each of the suppliers SR.

Therefore, in the information management method according to the first embodiment, a method is adopted in which the stored hash value HVs is stored in a state where it is linked to the previously issued item identification information UID. Therefore, even when the type, format, amount, and the like of the file that records the history information TRI are different from the supplier SR to the supplier SR, the information management server 100s can handle data formatted to have a fixed-length hash value, regardless of the form of the history information TRI for each of the suppliers SR. According to the above, even when the management items, granularity, and the like of the history information TRI vary in the supplier SR, there is no need to change the processing content performed by the information management server 100s. Further, the traceability management system 100 can be constructed even at the stage where the recording method of the history information TRI is not determined in the supplier SR.

Further, in the information management method according to the first embodiment, at the stage when the history information TRI is recorded, the history information TRI is kept secret from the outside of the supplier SR. Further, when an incident or the like occurs, a request for disclosure is made only to the relevant supplier SR, and the history information TRI necessary for responding to the incident is collected in the information management server 100s. Further, it can be easily and clearly verified that there is no difference in the collected history information TRI from the time of registration. Therefore, a highly-convenient information management method is providable to each trader.

Further, in the application verification process of the first embodiment (see FIG. 6), the verification data Dd for verifying the stored hash value HVs is provided to the supplier terminal 50. Then, the hash verifier 31 acquires the verification hash value HVd generated by the hashing process using the verification data Dd. When the verification hash value HVd is a correct value, the hash verifier 31 determines that the stored hash value HVs acquired from the supplier terminal 50 is a correct value. According to such a verification method, the information management server 100s, without requesting the supplier terminal 50 to disclose the history information TRI, can verify that the generation of the stored hash value HVs by the hashing application HAP is operating correctly on the supplier terminal 50. Therefore, even when data processing for information management is simplified, the validity of the data stored in the information management server 100s is guaranteed.

Further, in the first embodiment, the hashing application HAP that performs the hashing process is provided to the supplier terminal 50. In such manner, by forcing the use of the hashing application HAP designated by the administrator ADM, the hashing application HAP can be updated at any timing of the administrator ADM. According to the above, since security is easily maintained, the risk of tampering with the history information TRI is further reducible.

Further, in the first embodiment, information indicating the version of the hashing application HAP that hashed in the supplier terminal 50 is included in the additional information AI transmitted to the information management server 100s. Therefore, even when the contents of the hashing process are changed for each version, the information management server 100s can correctly prepare a hash value for comparison to verify the stored hash values HVs and the like. According to the above, both maintaining security and simplifying data processing are made easier without compromise.

Further, in the first embodiment, the variable information VI that changes from the item IM to the item IM and the identification hash value HVi acquired by hashing the original data including the variable information VI are embedded in the item identification information UID. Therefore, duplication of the item identification information UID is easily avoidable. Further, in each of the terminal under control of the traceability management system 100, the validity of the item identification information UID is easily and reliably determinable.

Further, in the first embodiment, the characteristic information CI such as a code version and a pattern flag is embedded in the item identification information UID. The characteristic information CI is excluded from the original data to be hashed and scrambled. Therefore, each of the terminals and the like that has acquired the item identification information UID can extract the identification hash value HVi, the variable information VI, and the like from the item identification information UID based on the contents of the characteristic information CI. According to the above, each terminal can more reliably identify that the item identification information UID is a valid ID issued by the administrator ADM.

Further, in the first embodiment, the readable code CDs corresponding to a part of the item identification information UID is written on the attached label LB attached to the item IM. When these readable codes CDs are displayed on the attached label LB, even when one of the multiple item identification information UIDs causes an error, the user can visually identify the attached label LB that is the target of the error. In such manner, the convenience of information management is further improvable.

Further, in the first embodiment, the stored hash values HVs and the like are stored in the BC database BDB that uses a technology of the blockchain BC. According to the above, the possibility of tampering with the stored hash value HVs is further reduced. In such manner, the correctness of the history information TRI disclosed in response to the request for disclosure can be more reliably guaranteed.

Further, in the first embodiment, the information management server 100s acquires, from the finished product manufacturer MF to which the item IM is delivered, the ID link information LI that links the item identification information UID attached to the item IM to the product identification information PID. The ID link information LI is stored in the BC database BDB. According to such accumulation of the ID link information LI, the connection of the items IM from raw materials to the final products PD can be reliably recorded in the BC database BDB. Therefore, by referring to the ID link information LI, the information management server 100s can identify all requestees that are requested for disclosure of the history information TRI. In such manner, highly-accurate information disclosure is made possible.

Further, in the first embodiment, the stored hash value HVs generated from the history information TRI is not recorded in the two-dimensional code CDq. Among the stored hash value HVs and the item identification information UID, only the item identification information UID is recorded in the two-dimensional code CDq. Therefore, the amount of data recorded in the two-dimensional code CDq is reducible. In such manner, the size of the two-dimensional code CDq is made smaller.

Further, the item identification information UID of the first embodiment records an application ID, an activation deadline, and the like. According to such information, it is possible (a) to easily identify the application used for information management, and (b) to easily confirm the expiration of the item identification information UID, and the like. In such manner, the convenience of information management is further improvable.

Note that, in the above embodiment, the manufacturer terminal 10a corresponds to a "deliver-target terminal device," the supplier terminal 50 corresponds to an "target terminal device," the control circuit 100c corresponds to a "computer," and the information management server 100s corresponds to an "information management device." Further, the BC database BDB corresponds to a "database," the readable code CDs corresponds to a "character string," the hashing application HAP corresponds to an "application," the attached label LB corresponds to an "attached medium," and the ID link information LI corresponds to "linking information." Further, the supplier SR corresponds to a "reporter," the finished product manufacturer MF corresponds to a "deliver-target," the final product PD corresponds to a "related item," and the product identification information PID corresponds to "related identification information." Further, the supplier SR of the next process corresponds to a "deliver-target," the supplier terminal 50 of the next process corresponds to a "deliver-target terminal device," another item IM corresponds to a "related item," and another item IM corresponds to a "related item," the identification information UID of the another item (IM) corresponds to "related identification information."

### (Second Embodiment)

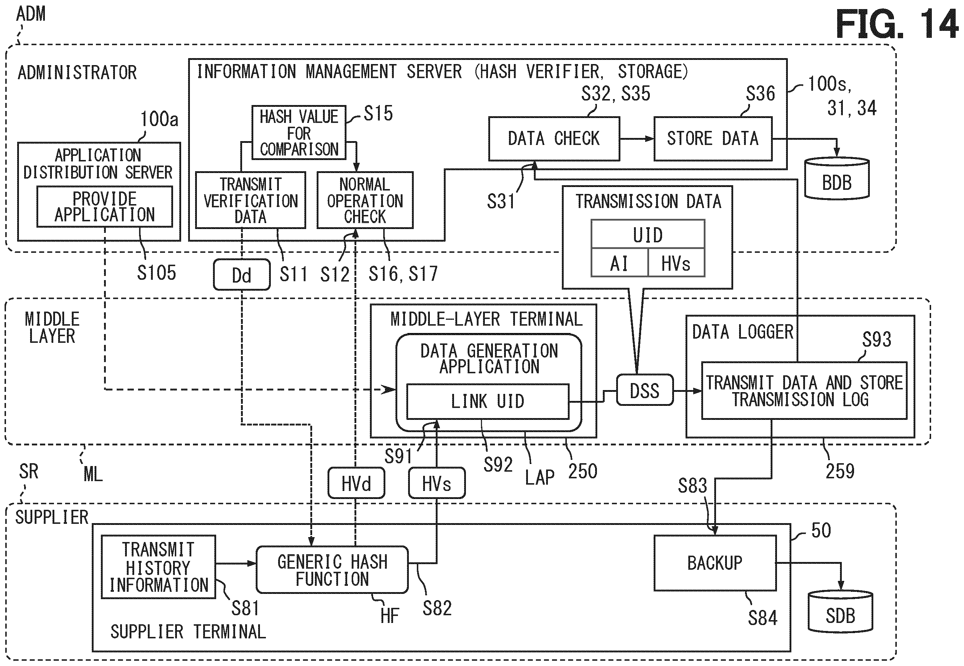

The second embodiment of the present disclosure shown in FIG. 14 is a modification of the first embodiment. In the supplier terminal 50 of the second embodiment, a general-purpose hash function (hereinafter referred to as a generic hash function HF) is used for the hashing process instead of using the hashing application HAP (see FIG. 4). A generic hash function HF calculates the stored hash value HVs and the verification hash value HVd in the supplier terminal 50, similarly to the hashing application HAP. The generic hash function HF may be prepared by the supplier SR, or may be specified by the administrator ADM (i.e., the information management server 100s). When the generic hash function HF is prepared by the supplier SR, the supplier terminal 50 transmits a notification indicating the generic hash function HF to be used to the information management server 100s. By using the generic hash function HF instead of the hashing application HAP, the transparency of data processing improves from the perspective of the reporter, such as the supplier SR or the like.

The application distribution server 100a performs the application distribution process of providing a data generation application LAP to a middle-layer terminal device 250 instead of performing the application distribution process of providing the hashing application HAP to the supplier terminal 50 (see FIG. 5). In the application distribution process, the application distribution server 100a provides the program data of the latest data generation application LAP to the middle-layer terminal device 250 based on an occurrence of a predetermined update trigger (see S105 in FIGS. 5 and 14).

The middle-layer terminal device 250 is an information processing device operated by a middle layer ML. The middle layer ML is independent from the administrator ADM and the supplier SR. For the middle layer ML, transparency of information from the supplier SR is ensured. The middle layer ML may be prepared by the administrator ADM, and may also be prepared by one or more suppliers SR. Further, when transparency is ensured and agreement is reached among the administrator ADM, the supplier SR (i.e., the reporter), the regulatory agency (i.e., an auditor), and the like, the middle layer ML may be installed in a part of the environment which belongs to the administrator ADM or the supplier SR. It. In a configuration in which a plurality of suppliers SR are linked to one middle layer ML, even when the transparency of information is ensured by using the generic hash function HF, the information of other suppliers SR cannot be viewed. Since the middle layer ML is linked to the supplier SR, the middle-layer terminal device 250 is also a terminal linked to the supplier SR.

The middle-layer terminal device 250 is communicably connected to the application distribution server 100a, the information management server 100s, the supplier terminal 50, and the like. The middle-layer terminal device 250, like the supplier terminal 50, has a configuration including a control circuit as a main component. The control circuit includes a processor, a RAM, a storage, an input/output interface, a bus connecting these, and the like, and functions as a computer that performs arithmetic processing. The middle-layer terminal device 250 executes the data generation application LAP by the processor. The data generation application LAP causes the middle-layer terminal device 250 to perform (a) a process of acquiring the item identification information UID issued by the ID issuance process (see FIG. 7) from the issuer 32 (see FIG. 3), and (b) a process of generating transmission data DSS including the item identification information UID. The middle-layer terminal device 250 is capable of storing a predetermined number of item identification information UIDs that are collectively issued through batch processing by the issuer 32.

The middle-layer terminal device 250 is connected to a data logger 259. The data logger 259 records a transmission log of the transmission data DSS transmitted from the middle-layer terminal device 250. The data logger 259 provides the supplier terminal 50 with a backup of the transmission data DSS transmitted to the information management server 100s, together with the transmission log. The transmission log records information indicating what kind of data was transmitted to which destination.

The data logger 259 has a checker function. The data logger 259 checks that the transmission data DSS transmitted to the information management server 100s (i.e., the storage 34) and the supplier terminal 50 have the same content. The data logger 259 records information indicating that the transmission data DSS transmitted to the storage 34 and the supplier terminal 50 have the same content in a transmission log provided to the supplier terminal 50.

Next, details of a hash verification process performed by the hash verifier 31 and details of a series of data storage processes for storing stored hash values HVs and the like in the databases BDB and SDB will be explained in order.

The hash verification process is a process equivalent to the application verification process (see FIG. 6) of the first embodiment. In the hash verification process, it is checked whether the generic hash function HF is operating normally. The hash verification process is periodically performed by the hash verifier 31. In the hash verification process, the hash verifier 31 provides the verification data Dd to the supplier terminal 50 by data transmission (S11). The verification data Dd is transmitted to the generic hash function HF in the supplier terminal 50. The hash verifier 31 acquires, from the supplier terminal 50, the verification hash value HVd generated from the verification data Dd by the hashing process using the generic hash function HF (S12).

The hash verifier 31 transmits the verification data Dd to the same hash function as the generic hash function HF used in the supplier terminal 50, and calculates a hash value for comparison (S15). The hash verifier 31 determines whether the generic hash function HF is operating normally in the supplier terminal 50 by comparing the received verification hash value HVd with the hash value for comparison (S16). When the verification hash value HVd is the same as the hash value for comparison (S16: YES), the hash verifier 31 determines that the generic hash function HF is operating normally (S17). In such a case, the hash verifier 31 assumes that the validity of the stored hash value HVs is in a guaranteeable state.

The data storage process is performed through cooperation between the supplier terminal 50, the middle-layer terminal device 250, and the information management server 100s. The hash generator 64 (see FIG. 3) of the supplier terminal 50 transmits the pre-processing data including the history information TRI (see FIG. 1) to the generic hash function HF (S81) to generate a stored hash value HVs. The supplier terminal 50 transmits the stored hash value HVs from the information transmitting unit 65 (see FIG. 3) to the middle-layer terminal device 250 (S82).

The middle-layer terminal device 250 receives and acquires the stored hash value HVs transmitted from the supplier terminal 50 (S91). The middle-layer terminal device 250 prepares one of the item identification information UIDs acquired in advance from the issuer 32 as the item identification information UID to be linked to the stored hash value HVs. Further, the middle-layer terminal device 250 generates the additional information AI to be added to the stored hash value HVs. The additional information AI includes application information related to the data generation application LAP and item information related to the item IM (see FIG. 1). The application information includes information indicating the version of the data generation application LAP in operation, information indicating an application provider, and the like. The item information includes information indicating a type of the item IM linked to the stored hash value HVs, information indicating the supplier SR, and the like.

The middle-layer terminal device 250 generates the transmission data DSS through a process of linking the item identification information UID with the stored hash value HVs and the additional information AI (S92). The middle-layer terminal device 250 transmits the transmission data DSS to the storage 34 via the data logger 259 (S93). Further, the middle-layer terminal device 250 also provides the supplier terminal 50 with the transmission data DSS having the same content as that transmitted to the storage 34. At such timing, the data logger 259 records a transmission log of the transmission data DSS.

The information management server 100s performs the same steps as the hash storage process (see FIG. 9) of the first embodiment in the data storage process. Specifically, the information management server 100s uses the acquirer 33 (see FIG. 3) to acquire the transmission data DSS by receiving it from the middle layer ML (S31). The storage 34 refers to a verification result in the hash verification process, and when it is determined that the generic hash function HF is operating normally (S32: YES), the storage 34 determines that the stored hash value HVs acquired this time is a correct value (S35). Based on a fact that the validity of the transmission data DSS including the stored hash value HVs is confirmed, the storage 34 stores the stored hash value HVs and the additional information AI, and the like in the BC database BDB in association with the item identification information UID. (S36).

The supplier terminal 50 prepares a backup of the transmission data DSS by receiving information from the data logger 259 by using the information receiver 62 (S83). The supplier terminal 50 stores the transmission data DSS as a backup and a transmission log in the supplier database SDB by linking them to the history information TRI (see FIG. 1) (S84).

The second embodiment described so far has the same effects as the first embodiment, and the information transmitted from the reporter such as the supplier SR and the like to the administrator ADM is processed to have a fixed length by hashing, thereby making it possible to simplify the data processing for information management.

Further, in the second embodiment, the item identification information is issued to the middle-layer terminal device 250 as the target terminal device operated as the middle layer ML. Then, the information management server 100s acquires the transmission data DSS in which the middle-layer terminal device 250 has linked the item identification information UID to the stored hash value HVs generated by the supplier SR which is in operation by the supplier SR. As described above, when the data generation process that links the stored hash value HVs and the item identification information UID is performed in the middle layer ML, there is no need to force the supplier SR to use the hashing application HAP. In such manner, the transparency of information processing improves, making it possible to lower psychological hurdles for introducing the traceability management system 100.

Further, in the second embodiment, the supplier terminal 50 is provided with the transmission data DSS having the same content as the item identification information UID and the stored hash value HVs stored in the BC database BDB. Further, the transmission data DSS provided to the supplier terminal 50 is stored as a backup in the supplier database SDB operated by the supplier SR. Therefore, when the administrator ADM extracts the transmission data DSS (storage target data), the occurrence of such extraction can be verified using the backup on the supplier SR side. In such manner, the administrator ADM and the reporter can share the fact that no unauthorized data extraction has been performed, thereby further improving the transparency of information processing.

Note that, in the second embodiment, the transmission data DSS corresponds to "storage target data" and "data stored by the reporter," and the supplier database SDB corresponds to a "reporter database." Further, the supplier terminal 50 corresponds to a "reporter terminal device," and the middle-layer terminal device 250 corresponds to an "target terminal device."

### (Third Embodiment)

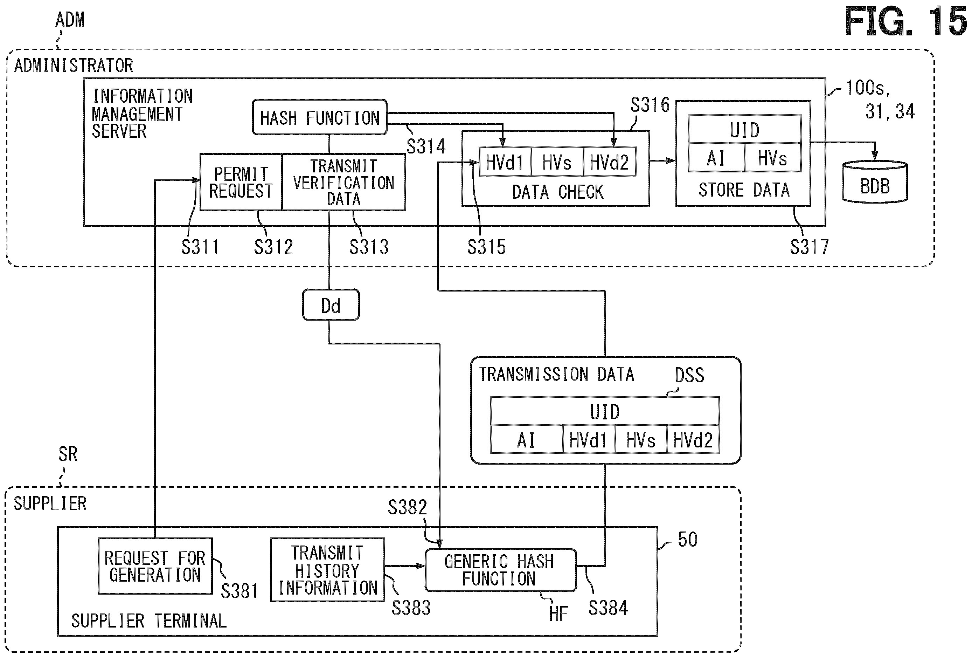

The third embodiment of the present disclosure shown in FIG. 15 is a modification of the second embodiment. In the third embodiment as well, the supplier terminal 50 uses the generic hash function HF for the hashing process. On the other hand, in the third embodiment, the application distribution server 100a, the middle layer ML, and the middle-layer terminal device 250 (see FIG. 14) are omitted. Therefore, a terminal to which the item identification information UID is issued is the supplier terminal 50, as in the first embodiment. Further, in the third embodiment, the data storage process including the hash verification process is performed through cooperation between the supplier terminal 50 and the information management server 100s. Details of the data storage process of the third embodiment will be explained in the following.

The supplier terminal 50 requests the information management server 100s to generate the verification data Dd (S381). When the information management server 100s obtains the request transmitted by the supplier terminal 50 (S311), it determines whether or not to permit the request. When the request comes in from a valid supplier terminal 50 registered in advance, the information management server 100s permits the request (S312), and provides the verification data Dd to the supplier terminal 50 (S313).

The information management server 100s prepares the same hash function as the generic hash function HF presented in advance from the supplier terminal 50. The information management server 100s also transmits the verification data Dd transmitted to the supplier terminal 50 to the prepared hash function. In such manner, a set of hash values for comparison is calculated (S314).

The supplier terminal 50 acquires the verification data Dd provided from the information management server 100s (S382). Further, the supplier terminal 50 transmits the pre-processing data including the history information TRI (see FIG. 1) to the generic hash function HF (S383). Further to the stored hash value HVs, the supplier terminal 50 calculates a first verification hash value HVd1 and a second verification hash value HVd2.

The first verification hash value HVd1 is a verification hash value HVd generated by the hashing process using the verification data Dd before hashing the pre-processing data. The second verification hash value HVd2 is a verification hash value HVd generated by the hashing process using the verification data Dd before hashing the pre-processing data. The supplier terminal 50 inputs the verification data Dd, the pre-processing data, and the verification data Dd into the generic hash function HF in a described order, and calculates the first verification hash value HVd1, the stored hash value HVs, and the second verification hash value HVd2. Note that the verification data Dd used to generate each of the verification hash values HVd1 and HVd2 may have the same content or may have different content.

The supplier terminal 50 generates the additional information AI. The supplier terminal 50 generates the transmission data DSS by linking the first verification hash value HVd1, the stored hash value HVs, and the second verification hash value HVd2, together with the additional information AI, to the item identification information UID. In the transmission data DSS, the stored hash value HVs is sandwiched between the first verification hash value HVd1 and the second verification hash value HVd2. The supplier terminal 50 transmits the transmission data DSS to the information management server 100s (S384).

The information management server 100s acquires the transmission data DSS by receiving it from the supplier terminal 50 (S315). The information management server 100s compares the first verification hash value HVd1 and the second verification hash value HVd2 included in the transmission data DSS with a hash value for comparison, and checks whether each of the verification hash values HVd1, HVd2 is correct. When the verification hash values HVd1 and HVd2 are both the same as the hash value for comparison, the information management server 100s determines that the generic hash function HF is operating normally and that the validity of the stored hash value HVs is in a guaranteeable state (S316).

The information management server 100s deletes the first verification hash value HVd1 and the second verification hash value HVd2 from the transmission data DSS based on a fact that the validity of the stored hash value HVs has been confirmed. The information management server 100s stores, in the BC database BDB, the storage target data in which the item identification information UID is linked to the additional information AI and the stored hash value HVs (S317).

The third embodiment described so far also has the same effects as the first and second embodiments, enabling simplification of the data processing for information management. Further, in the third embodiment, the first verification hash value HVd1 and the second verification hash value HVd2 are acquired from the supplier terminal 50. Thereafter, when the verification hash values HVd1 and HVd2 sandwiching from front and rear of the stored hash value HVs are both correct values, it is determined that the stored hash value HVs is the correct value. Therefore, even when the generic hash function HF is used in the supplier terminal 50, the validity of the stored hash value HVs is guaranteed.

### (Other Embodiments)

Although the multiple embodiments according to the present disclosure have been described above, the present disclosure is not construed as being limited to the above-described embodiments, and can be applied to various embodiments and combinations within a range not departing from the spirit of the present disclosure.

The aspect of the item identification information UID in the above embodiment, specifically, the number of digits of the character string, the number and type of embedded information, and the like may be changed as appropriate. Further, the identification hash value HVi and the variable information VI do not need to be scrambled. Additionally, the readable code CDs may be omitted. Further, a symbol or the like that can be recognized by the user and is an identifier in place of the readable code CDs may be written on the attached label LB or the like. Further, the product identification information PID may also be issued to the finished product manufacturer MF by the information management server 100s, similarly to the item identification information UID. In these modified examples, the finished product manufacturer MF also corresponds to a "reporter."

In the first modification of the above embodiment, further to the item identification information UID, the stored hash value HVs is also recorded in the two-dimensional code CDq. Further, on the attached label LB in the second modification of the above embodiment, another two-dimensional code recording the stored hash value HVs is printed, in a parallel arrangement with the two-dimensional code CDq recording the item identification information UID. As described above, the stored hash value HVs may also be distributed together with the item IM.

In the embodiment described above, a request for information disclosure may be made from the previous process side (i.e., an upstream side) to the post process side (i.e., a downstream side) in the supply chain SC, or from the downstream side to the upstream side. According to the request for information disclosure to the upstream side, when a fault occurs in the item IM or the final product PD, it becomes possible to trace the history information TRI of the raw materials or parts used in the item IM or the final product PD. On the other hand, according to the request for information disclosure to the downstream side, when a fault is found in the item IM, it becomes possible to identify the item IM or the final product PD in the subsequent process for which the present item IM is used.

The traceability management system 100 in the third modification of the above embodiment is divided into a recording system and an inquiry system 200 shown in FIG. 16. The recording system is configured to have, as a main component, the information management server 100s (see FIG. 1) in the above embodiment. However, a configuration corresponding to the disclosure processor 35 is omitted from the information management server 100s of the recording system.

On the other hand, the inquiry system 200 is a system corresponding to the disclosure processor 35 of the above embodiment, and performs the history disclosure process (see FIG. 13). The inquiry system 200 includes a collection server 200a, a BC database BDB, and the like. The inquiry system 200 may be operated by an organization different from a management organization that manages the recording system. As an example, an entity responsible for the final product PD may serve as the management organization for the inquiry system 200.

The collection server 200a includes a receiver 201, a data matcher 202, and a data provider 203. The receiver 201 receives a request for disclosure of the history information TRI from an inquiry terminal 110 of an inquirer IQ who requests for provision of the history information (S131). The inquiry terminal 110 may be the manufacturer terminal 10a and the user terminal 10b described above. The inquiry terminal 110 may include not only the user terminal 10b operated by the secondary user U2 or the recycler RC, but also the user terminal 10b (i.e., an end user terminal) owned by the end user US described above. That is, the inquirer IQ may be any of the finished product manufacturer MF, the secondary user U2, the recycler RC, and the end user US.

The inquirer IQ can perform a request for disclosure using the product identification information PID (e.g., a vehicle ID, and the like) that identifies the final product PD. The receiver 201 receives the product identification information PID provided from the inquiry terminal 110, and identifies, from the product identification information PID, the item identification information UID which identifies a target for collecting the history information TRI (S132). Further, the receiver 201 identifies the stored hash value HVs related to the set item identification information UID.

Note that a reception function for receiving the product identification information PID may be installed in an external processing device different from the collection server 200a. On the other hand, an identification function for identifying the stored hash value HVs from the item identification information UID is installed inside the traceability management system 100 or the inquiry system 200.

Based on the item identification information UID identified by the receiver 201 or the like, the BC database BDB identifies the supplier SR that requests for provision of the history information TRI. The BC database BDB transmits a request to provide the history information TRI along with the item identification information UID to the supplier terminal 50 of the identified supplier SR (S133). Each supplier SR becomes a reporter who discloses the history information TRI. The supplier terminal 50 provides data such as the history information TRI accumulated in the supplier database SDB to the collection server 200a.

The data matcher 202 acquires data such as the history information TRI and the like in response from the supplier terminal 50 (S134). The data matcher 202 cooperates with the BC database BDB, sequentially identifies each of upstream suppliers SR in the supply chain SC, and collects the history information TRI therefrom. The data matcher 202 performs a verification process (Before-After check) to determine whether the context of the hash values is correctly established, and confirms whether the acquired history information TRI has not been tampered with (S135 to S138). The data matcher 202 delivers the history information TRI that has been confirmed not to have been tampered with to the data provider 203.

The data provider 203 generates provision data to be provided to the inquirer IQ by editing the verified history information TRI delivered from the data matcher 202. The data provider 203 provides the generated provision data to the inquiry terminal 110 of the inquirer IQ who has initiated a request for disclosure (S139).

In the embodiment described above, it is not necessary to issue the item identification information UID to a trader such as a distributor or the like. The terminal linked to the distributor links the history information TRI recorded during a distribution process to the item identification information UID attached to the item IM being transported, and uploads it to the information management server 100s. In such manner, the history information TRI in the distribution process is also stored in the BC database BDB in association with the item identification information UID, and is thus providable to each of the traders.

The data logger 259 used in the second embodiment is also applicable to the first and third embodiments. Specifically, the data logger 259 is connected to the supplier terminal 50, and records the item identification information UID, stored hash value HVs, and the like transmitted from the supplier terminal 50. In such manner, a backup whose identity with the data acquired by the information management server 100s is guaranteed can be stored in the supplier database SDB together with the history information TRI.

In the transmission data DSS of the third embodiment, the stored hash value HVs is sandwiched between the first verification hash value HVd1 and the second verification hash value HVd2 on both sides. However, when security is ensured through system operation, the stored hash value HVs does not need to be sandwiched between the verification hash values on both of front and rear sides. Specifically, in the transmission data DSS of the fourth modification of the third embodiment, only the first verification hash value HVd1 on a front side or only the second verification hash value HVd2 on a rear side is attached to the stored hash value HVs.

Each function of the application distribution server 100a and the information management server 100s may be provided by one server device. Further, the application distribution server 100a and the information management server 100s may be on-premises server devices physically managed by the administrator ADM, the platformer, or may also be a virtual configuration provided on a cloud. Further, the BC database BDB and the supplier database SDB may also be constructed in a virtual file server provided on the cloud.

Various hash functions may be used to generate the stored hash value HVs, the verification hash value HVd, and the identification hash value HVi in the above embodiments. The hash function has a characteristic that the same hash value will not be output from different inputs, and it is substantially impossible to predict an input from the output hash value. With these characteristics, encryption algorithms such as SHA-256, SHA-1, SHA-2, SHA-3 and the like can be used as appropriate depending on the required output length (number of bits). Further, the hash functions used to calculate each hash value may be the same or different.

In the embodiments described above, each function provided by the traceability management system 100 can be provided by software and hardware that executes it, only software, only hardware, or a complex combination thereof. Similarly, each function provided by the supplier terminal 50, the manufacturer terminal 10a, the middle-layer terminal device 250, and the like may also be provided by software and hardware that executes it, only software, only hardware, or a complex combination thereof. When these functions are provided by electronic circuits as hardware, each function can also be provided by digital circuits that include a large number of logic circuits, or by analog circuits.

Each processor in the above embodiments may have a configuration including at least one arithmetic core such as a CPU (Central Processing Unit), a GPU (Graphics Processing Unit) and the like. The processor may further include a field-programmable gate array (FPGA), an IP core having other dedicated functions and the like.

The form of the storage medium (i.e., non-transitory, tangible storage medium) employed as each storage of the above embodiment and storing each program related to the information management method of the present disclosure may be changed as appropriate. For example, the storage medium is not limited to a configuration provided on a circuit board, but also may be provided in the form of a memory card or the like, inserted into a slot, and electrically connected to a bus of a computer. Further, the storage medium may be an optical disk, a hard disk drive, or the like used as a source for copying or distributing a program to a computer.

The control unit and the method thereof which have been described in the present disclosure may be implemented by a special purpose computer which includes a processor programmed to perform one or more functions implemented by computer programs. Alternatively, the device and the method thereof described in the present disclosure may be implemented by dedicated hardware logic circuit. Alternatively, the device and the method thereof described in the present disclosure may also be implemented by one or more dedicated computers configured as a combination of a processor performing a computer program and one or more hardware logic circuits. Further, the computer program may be stored in a non-transitory, tangible computer-readable recording medium as an instruction to be executed by a computer.

### (Disclosure of Technical Ideas)

The specification discloses multiple technical ideas described in multiple items listed below. Some items may be written in a multiple dependent form, in which subsequent items alternatively refer to preceding items. Further, some items may be written in a multiple dependent form referring to another multiple dependent form. These features described in a multiple dependent form define multiple technical features.

### (Technical Idea 1)

An information management method that is implemented by a computer (100c) and manages information provided from a plurality of reporters (SR) constituting a supply chain (SC), the method comprising, in a process executed by at least one processor (11), steps of:
issuing item identification information (UID) that is attached to an item (IM) shipped by a reporter and identifies the item to an target terminal device (50, 250) linked to the reporter (S21 to S26);
acquiring a stored hash value that is a hash value (HVs) of history information (TRI) related to the item together with the item identification information (S31); and
storing the stored hash value in a database (BDB) in association with the item identification information (S36).

### (Technical Idea 2)

The information management method of the Technical Idea 1, further comprising steps of:
providing, to the target terminal device, verification data (Dd) for verifying the stored hash value acquired from the target terminal device (S11, S313);
acquiring a verification hash value (HVd) generated by a hashing process using the verification data from the target terminal device (S12, S315); and
determining that the stored hash value acquired from the target terminal device is a correct value when the verification hash value is a correct value (S35, S316).

### (Technical Idea 3)

The information management method of the Technical Idea 2, further comprising steps of:
providing an application (HAP) that performs the hashing process to the target terminal device (S101 to S105).

### (Technical Idea 4)

The information management method of the Technical Idea 3, wherein
in the step of acquiring the stored hash value, additional information including information indicating a version of the application that has performed the hashing process is further acquired.

### (Technical Idea 5)

The information management method of the Technical Idea 2, wherein
in the step of acquiring the verification hash value, a first verification hash value (HVd1) generated in the hashing process using the verification data before performing the hashing process of the history information and a second verification hash value (HVd2) generated in the hashing process using the verification data after performing the hashing process of the history information are acquired from the target terminal device, and
in the step of determining the stored hash value, it is determined that the stored hash value acquired from the target terminal device is a correct value when both the first verification hash value and the second verification hash value are correct values.

### (Technical Idea 6)

The information management method of the Technical Idea 1, wherein
in the step of issuing the item identification information, the item identification information is issued to a middle-layer terminal device operated as the target terminal device in a middle layer (ML), and
in the step of acquiring the stored hash value, a storage target data (DSS) is acquired, which links, by the middle-layer terminal device, the item identification information to the stored hash value generated by a reporter terminal device operated by the reporter.

### (Technical Idea 7)

The information management method of the Technical Idea 6 further comprising steps of:
providing data stored by the reporter having same content as the item identification information and the stored hash value stored in the database to the reporter terminal device (S93); and
storing the data stored by the reporter in a reporter database (SDB) operated by the reporter (S84).

### (Technical Idea 8)

The information management method of any one of the Technical Ideas 1 to 7, wherein
in the step of issuing the item identification information, at least one variation information (VI) that varies for each item and an identification hash value (HVi) acquired by hashing original data including the variation information are embedded in the item identification information.

### (Technical Idea 9)

The information management method of the Technical Idea 8, wherein
in the step of issuing the item identification information, characteristic information (CI) indicating characteristics of the item identification information is embedded in the item identification information, and
the characteristic information is excluded from the original data.

### (Technical Idea 10)

The information management method of the Technical Ideas 1 to 8, further comprising steps of:
writing a character string (CDs) corresponding to a part of the item identification information in a readable state on an attached medium (LB) recording the item identification information and attached to the item (S73, S74).

### (Technical Idea 11)

The information management method of any one of Technical Ideas 1 to 9, wherein
in the step of storing in the database, the stored hash value is stored using a blockchain (BC) technology.

### (Technical Idea 12)

The information management method of any one of Technical Ideas 1 to 10, further including the step of:
acquiring, from a deliver-target terminal device (10a) of a deliver-target (MF) to which the item is delivered, link information (LI) that links the item identification information attached to the item and related identification information (PID) that identifies related items (PD) related to the item (S51); and
storing the link information in the database (S52).

### (Technical Idea 13)

An information management device that manages information provided by a plurality of reporters (SR) constituting a supply chain (SC), the information management device comprising:
an issuer (32) issuing item identification information (UID) that is attached to an item (IM) shipped by a reporter and identifies the item to an target terminal device (50, 250) linked to the reporter (S21 to S26);
an acquisition unit (33) acquiring a stored hash value that is a hash value (HVs) of history information (TRI) related to the item together with the item identification information (S31); and
a storage unit (34) storing the stored hash value in a database (BDB) in association with the item identification information (S36).

## Claims

1. An information management method that is implemented by a computer (100c) and manages information provided from a plurality of reporters (SR) constituting a supply chain (SC), the method comprising, in a process executed by at least one processor (11), steps of:
issuing (S21 to S26), to a target terminal device (50, 250) linked to the reporter, item identification information (UID) for identifying an item (IM) shipped by the reporter, the item identification information being attached to the item (IM);
acquiring (S31), together with the item identification information, a stored hash value (HVs) that is generated by hashing history information (TRI) related to the item; and
storing (S36) the stored hash value in a database (BDB) in association with the item identification information.

2. The information management method of Claim 1, further comprising steps of:
providing (S11, S313), to the target terminal device, verification data (Dd) for verifying the stored hash value acquired from the target terminal device;
acquiring (S12, S315) a verification hash value (HVd) generated by a hashing process using the verification data from the target terminal device; and
determining (S35, S316) that the stored hash value acquired from the target terminal device is valid when the verification hash value is valid.

3. The information management method of Claim 2, further comprising steps of:
providing (S101 to S105) an application (HAP) that performs the hashing process to the target terminal device.

4. The information management method of Claim 3, wherein
the step of acquiring the stored hash value includes further acquiring additional information including information indicative of a version of the application that has performed the hashing process.

5. The information management method of Claim 2, wherein
the step of acquiring the verification hash value includes acquiring, from the target terminal device,
a first verification hash value (HVd1) generated in the hashing process using the verification data prior to performing the hashing process of the history information, and
a second verification hash value (HVd2) generated in the hashing process using the verification data subsequent to performing the hashing process of the history information, and
the step of determining the stored hash value includes determining that the stored hash value acquired from the target terminal device is valid when both the first verification hash value and the second verification hash value are valid.

6. The information management method of Claim 1, wherein
the step of issuing the item identification information includes issuing the item identification information to a middle-layer terminal device operated as the target terminal device in a middle layer (ML), and
the step of acquiring the stored hash value includes acquiring storage target data (DSS) formed by linking, with the middle-layer terminal device, the item identification information to the stored hash value generated by a reporter terminal device operated by the reporter.

7. The information management method of Claim 6 further comprising steps of:
providing (S93), to the reporter terminal device, reporter-stored data having same content as the item identification information and the stored hash value that are stored in the database; and
storing (S84) the reporter-stored data in a reporter database (SDB) operated by the reporter.

8. The information management method of any one of Claims 1 to 7, wherein
the step of issuing the item identification information includes embedding, in the item identification information, at least one variation information (VI) and an identification hash value (HVi) generated by hashing original data including the variation information, and
the at least one variation information for one item is different from the at least one variation information for another item.

9. The information management method of Claim 8, wherein
the step of issuing the item identification information includes embedding, in the item identification information, characteristic information (CI) indicative of characteristics of the item identification information, and
the characteristic information is excluded from the original data.

10. The information management method of any one of Claims 1 to 7, further comprising steps of:
writing (S73, S74), in a readable manner, a character string (CDs) corresponding to a part of the item identification information on an attached medium (LB), wherein
the attached medium stores the item identification information and is attached to the item.

11. The information management method of any one of Claims 1 to 7, wherein
the step of storing in the database includes storing the stored hash value using a blockchain (BC) technology.

12. The information management method of any one of Claims 1 to 7, further including steps of:
acquiring, from a deliver-target terminal device (10a) of a deliver-target (MF) to which the item is delivered, link information (LI) for linking the item identification information attached to the item to related identification information (PID) for identifying a related item (PD) related to the item (S51); and
storing the link information in the database (S52).

13. An information management device that manages information provided by a plurality of reporters (SR) constituting a supply chain (SC), the information management device comprising:
an issuer (32) that is configured to issue, to a target terminal device (50, 250) linked to the reporter, item identification information (UID) for identifying an item (IM) shipped by the reporter, the item identifying information being attached to the item;
an acquisition unit (33) that is configured to acquire, together with the item identification information, a stored hash value (HVs) that is generated by hashing history information (TRI) related to the item; and
a storage unit (34) that is configured to store the stored hash value in a database (BDB) in association with the item identification information (S36).
